# EUROPÄISCHE PATENTANMELDUNG

(11) **EP 4 650 893 A1**
(43) Veröffentlichungstag der Anmeldung: **19.11.2025**
(21) Anmeldenummer: 24176597.3
(22) Anmeldetag: 17.05.2024
(51) Int. Cl.: G05B 19/4097, B26D 5/00, B26F 1/38

(54) **VERFAHREN ZUM AUTOMATISIERTEN GENERIEREN EINES SCHNITTPROGRAMMS UND ZUGEHÖRIGES COMPUTERPROGRAMMPRODUKT**

(71) Anmelder: Krug & Priester GmbH & Co. KG, 72336 Balingen (DE)
(72) Erfinder:
(74) Vertreter: Kohler Schmid Möbus Patentanwälte

(57) **Zusammenfassung**

Ein Verfahren zum automatisierten Generieren eines Schnittprogramms (10) für eine elektrisch angetriebene Schneidemaschine (11) weist erfindungsgemäß folgende Verfahrensschritten auf, um einen einzelnen Druckbogen (1), welcher grafische Schnittmarken (3₁-3₄) aufweist, oder einen Stapel (5) von gleichen Druckbögen (1), welche jeweils die gleichen grafischen Schnittmarken (3₁-3₄) aufweisen, zu schneiden:
- Bereitstellen eines digitalen Druckbogens (1'), der ein digitales Druckbild (2') und vektorbasierte Schnittmarken (3₁'-3₄') enthält, in Form einer digitalen Datei;
- automatisiertes Identifizieren der vektorbasierten Schnittmarken (3') in dem digitalen Druckbogen (1') durch Verarbeiten von im digitalen Druckbogen (1') enthaltenen Vektordaten; und
- automatisiertes Generieren eines Schnittprogramms (10) für eine elektrisch angetriebene Schneidemaschine (11) anhand der identifizierten, vektorbasierten Schnittmarken (3₁'-3₄'), um einen Druckbogen (1) oder einen Stapel (5) von Druckbögen (1) in der Schneidemaschine (11) zu schneiden.

## Beschreibung

Die Erfindung betrifft ein Verfahren zum automatisierten Generieren eines Schnittprogramms für eine elektrisch angetriebene Schneidemaschine, um einen einzigen Druckbogen, welcher ein Druckbild mit grafischen Schnittmarken aufweist, oder einen Stapel von Druckbögen, welche jeweils das gleiche Druckbild mit den gleichen grafischen Schnittmarken aufweisen, zu schneiden. Die Erfindung betrifft auch ein zugehöriges Computerprogrammprodukt, welches Codemittel aufweist, die zum Durchführen aller Schritte des Verfahrens angepasst sind, wenn das Programm auf einer Maschinensteuerung einer elektrisch angetriebenen Schneidemaschine abläuft.

Derartige Verfahren sind im Stand der Technik hinlänglich bekannt. So ist beispielsweise aus der DE 10 2007 017 560 B4 ein Verfahren zum automatischen Beschneiden gestapelter, bedruckter Materialbögen bekannt, bei dem in der Druckvorstufe erstellte Informationen für Beschneidvorgänge der Materialbögen in einer Schneidemaschine genutzt werden. Dabei erfolgt eine direkte Datenübertragung der durch die Bearbeitung der Materialbögen in der Druckvorstufe vorliegenden alphanumerischen Bearbeitungsdaten zur Steuereinheit der Schneidemaschine. Das Steuerprogramm der Steuereinheit verarbeitet diese Bearbeitungsdaten und stellt automatisch abarbeitungsfähige Steuerdaten für den technologischen Arbeitsablauf der Schneidvorgänge bereit.

Der vorliegenden Erfindung liegt demgegenüber die Aufgabe zugrunde, ein Verfahren der eingangs genannten Art dahingehend weiterzubilden, dass ein Schnittprogramm allein aus einem digitalen Druckbogen, wie er beispielsweise aus der Druckvorstufe des Druckbogens vorliegt, generiert werden kann, also unabhängig davon, mit welcher Software dieser digitale Druckbogen erstellt worden ist.

Diese Aufgabe wird bei dem eingangs genannten Verfahren erfindungsgemäß durch folgende Verfahrensschritte gelöst:
- Bereitstellen eines digitalen Druckbogens, der ein digitales Druckbild und vektorbasierte Schnittmarken enthält, in Form einer digitalen Datei;
- automatisiertes Identifizieren der vektorbasierten Schnittmarken in dem digitalen Druckbogen durch Verarbeiten von im digitalen Druckbogen enthaltenen Vektordaten; und
- automatisiertes Generieren eines Schnittprogramms für eine elektrisch angetriebene Schneidemaschine anhand der identifizierten, vektorbasierten Schnittmarken, um einen Druckbogen oder einen Stapel von Druckbögen in der Schneidemaschine zu schneiden.

Vorzugsweise wird der digitale Druckbogen aus einer Druckvorstufe des Druckbogens bereitgestellt.

Die digitale Datei kann beispielsweise in einem vektorbasierten Dateiformat, wie z.B. im PDF(Portable Document Format)-Format oder im SVG(Scalable Vector Graphics)-Format, vorliegen.

Vorzugsweise umfasst das Identifizieren der vektorbasierten Schnittmarken das automatisierte Identifizieren einer Matrix von gleichgroßen, digitalen Bildelementen in dem digitalen Druckbogen sowie das automatisierte Identifizieren von randseitigen Vektoren, welche außerhalb der randseitig projizierten Reihen- und Spaltenbereiche der digitalen Bildelemente und parallel zu den Reihen und Spalten der Matrix verlaufen und insbesondere so kurz wie standardmäßige Schnittmarken sind, in dem digitalen Druckbogen als vektorbasierte Schnittmarken.

Bevorzugt wird das Schnittprogramm nicht mittels einer Maschinensteuerung der Schneidemaschine, sondern außerhalb der Maschinensteuerung, z.B. an einem separaten Computer, generiert und anschließend an die Maschinensteuerung übertragen. Die Übertragung des Schnittprogramms an die Maschinensteuerung kann beispielsweise mittels Scannen eines gedruckten zweidimensionalen Codes (z.B. QR-Code), welcher das Schnittprogramm enthält, mittels eines drahtgebundenen oder drahtlosen Netzwerks oder mittels eines mobilen Speichermediums, in dem das Schnittprogramm gespeichert ist, erfolgen.

Vorteilhafterweise können im Vorfeld der automatisierten Generierung des Schnittprogramms verschiedene Parameter für die Reihenfolge, Art und Anzahl der notwendigen Schnitte des Schnittprogramms vom Bediener gewählt werden, um das Schnittergebnis und die Schnittqualität zu beeinflussen.

Die Erfindung betrifft auch ein Computerprogrammprodukt, welches Codemittel aufweist, die zum Durchführen aller Schritte des erfindungsgemäßen Verfahrens angepasst sind, wenn das Programm auf einer Maschinensteuerung einer elektrisch angetriebenen Schneidemaschine abläuft.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fign. 1a, 1b: einen (gedruckten) Druckbogen (Fig. 1a) und schematisch einen diesem Druckbogen zugrundeliegenden, digitalen Druckbogen (Fig. 1b) der Druckvorstufe;
- Fig. 2: schematisch die einzelnen Verfahrensschritte des erfindungsge-mäßen Verfahrens zum automatisierten Generieren eines Schnitt-programms für eine elektrisch angetriebene Schneidemaschine;
- Fig. 3: schematisch eine elektrisch angetriebene Schneidemaschine zum Schneiden eines einzelnen Druckbogens oder eines Stapels von Druckbögen; und
- Fig. 4: ein mit dem erfindungsgemäßen Verfahren automatisiert generier-ten Schnittprogramm für die Schneidemaschine.

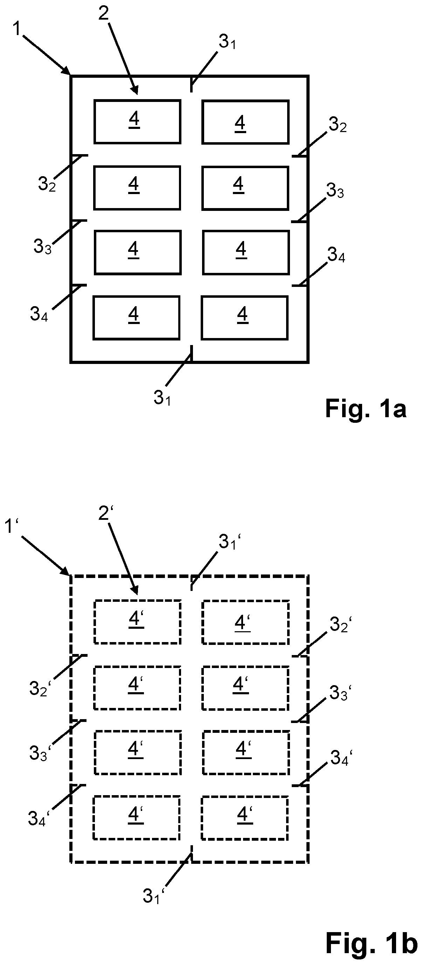

**Fig. 1a** zeigt einen (gedruckten) Druckbogen **1,** welcher ein Druckbild **2** mit grafischen Schnittmarken **3₁-3₄** aufweist. Das Druckbild 2 umfasst mehrere gleichgroße, identische Bildelemente **4,** wie z.B. Visitenkarten, die in einer Matrix, hier in einer 2x4-Matrix, angeordnet sind und von einer elektrisch angetriebenen Schneidemaschine mittels eines Schnittprogramms zugeschnitten werden sollen. Die grafischen Schnittmarken **3₁-3₄** befinden sich randseitig außerhalb der randseitig projizierten Reihen- und Spaltenbereiche der digitalen Bildelemente 4 und verlaufen parallel zu den Reihen und Spalten der Matrix.

**Fig. 1b** zeigt, wie gestrichelt angedeutet, den diesem (gedruckten) Druckbogen 1 zugrundeliegenden, digitalen Druckbogen **1',** also die digitale Datei, in der das Druckbild 2 mit den Bildelementen 4 als digitales Druckbild **2'** mit digitalen Bildelementen **4'** und die Schnittmarken 3₁-3₄ als vektorbasierte Schnittmarken **3₁'-3₄'** gespeichert sind. Vorzugsweise handelt es sich bei dem digitalen Druckbogen 1' um die finale digitale Datei der Druckvorstufe des gedruckten Druckbogens 1. Die digitale Datei kann in einem - auch außerhalb der Druckvorstufe - allgemeinen nutzbaren, vektorbasierten Dateiformat vorliegen, z.B. im PDF oder SVG-Format.

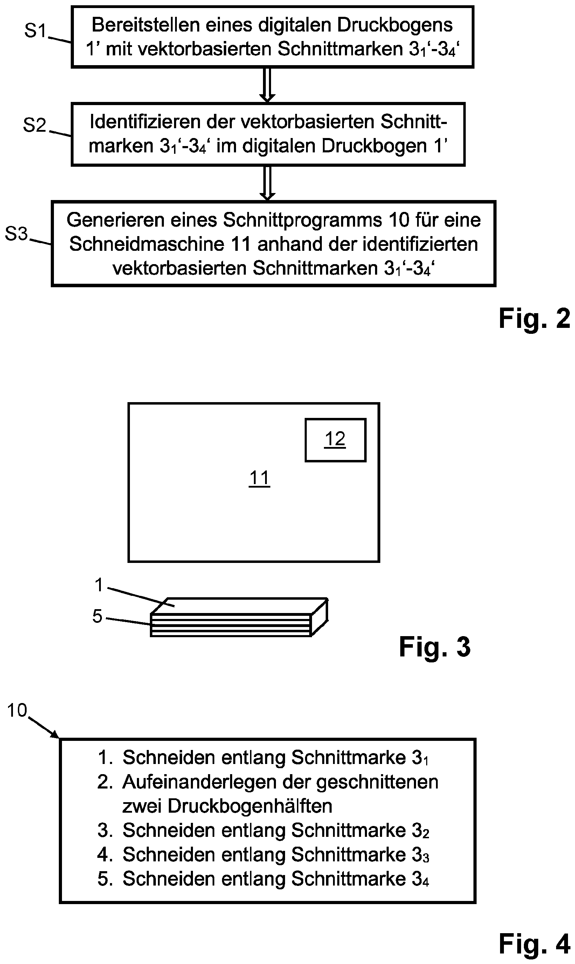

In **Fig. 2** sind die Verfahrensschritte zum automatisierten Generieren eines Schnittprogramms **10** (Fig. 4) für eine elektrisch angetriebene Schneidemaschine **11** (Fig. 3) gezeigt, um einen einzelnen Druckbogen 1 oder einen Stapel **5** von gleichen Druckbögen 1, welche jeweils das gleiche Druckbild 2 einschließlich der gleichen grafischen Schnittmarken 3₁-3₄ aufweisen, zuzuschneiden.

In einem ersten Verfahrensschritt **S1** wird der dem Druckbogen 1 bzw. den Druckbögen 1 zugrundeliegende, digitale Druckbogen 1', also die digitale Datei mit den vektorbasierten Schnittmarken 3₁'-3₄', bereitgestellt.

In einem zweiten Verfahrensschritt **S2** werden mittels einer geeigneten Software die im digitalen Druckbogen 1' enthaltenen Vektordaten automatisiert verarbeitet, um dadurch die vektorbasierten Schnittmarken 3₁'-3₄' des digitalen Druckbogens 1' mitsamt ihrer Position und Ausrichtung zu identifizieren. Vorzugsweise umfasst das Identifizieren der vektorbasierten Schnittmarken 3₁'-3₄' auch das automatisierte Identifizieren von matrixmäßig angeordneten, identischen digitalen Bildelementen 4' in dem digitalen Druckbogen 1' sowie das automatisierte Identifizieren von solchen randseitigen Vektoren, welche außerhalb der randseitig projizierten Reihen- und Spaltenbereiche der digitalen Bildelemente 4' und parallel zu den Reihen und Spalten der Matrix verlaufen, als vektorbasierte Schnittmarken 3₁'-3₄'.

In einem dritten Verfahrensschritt **S3** wird mittels einer geeigneten Software das Schnittprogramm 10 für die Schneidemaschine 11 anhand der identifizierten vektorbasierten Schnittmarken 3₁'-3₄' generiert.

Im Vorfeld der automatisierten Generierung des Schnittprogramms 10 können optional vom Benutzer verschiedene Parameter für die Reihenfolge, Art und Anzahl der notwendigen Schnitte des Schnittprogramms 10 gewählt bzw. vorgegeben werden, um das Schnittergebnis und die Schnittqualität zu beeinflussen.

**Fig. 3** zeigt die Schneidemaschine 11 zum Schneiden eines einzelnen Druckbogens 1 oder eines Stapels 5 von Druckbögen 1. Die Maschinensteuerung der Schneidemaschine 11 ist mit **12** bezeichnet.

Das automatisierte Generieren des Schnittprogramms 10 erfolgt außerhalb der Maschinensteuerung 12, bevorzugt an einem anderen Ort fern der Schneidemaschine 11. Das außerhalb der Maschinensteuerung 12 generierte Schnittprogramm 10 wird anschließend an die Maschinensteuerung 12 übertragen, beispielsweise mittels Scannen eines gedruckten zweidimensionalen Codes (z.B. QR-Code), welcher das Schnittprogramm enthält, mittels eines drahtgebundenen oder drahtlosen Netzwerks oder mittels eines mobilen Speichermediums, in dem das Schnittprogramm gespeichert ist.

**Fig. 4** zeigt beispielhaft ein Schnittprogramm 10 zum Zuschneiden des in Fig. 1a gezeigten Druckbogens 1, der eine 2x4-Matrix von Bildelemente 4 in Form von Visitenkarten und die grafischen Schnittmarken 3₁-3₄ aufweist. Das Schnittprogramm 10 wird von der Maschinensteuerung 12 ausgeführt, und zwar mit folgender Schnitt- bzw. Bearbeitungsabfolge:
1. Schneiden des Druckbogens 1 entlang der Schneidmarke(n) 3₁, um den Druckbogen 1 in zwei Druckbogenhälften zu schneiden;
2. Legen der um 180° gedrehten, einen Druckbogenhälfte auf die andere Druckbogenhälfte;
3.-5. sukzessives Schneiden der beiden aufeinanderliegenden Druckbogenhälften entlang der Schneidmarken 3₂, 3₃ und 3₄, um so die einzelnen Visitenkarten zuzuschneiden.

## Patentansprüche

1. Verfahren zum automatisierten Generieren eines Schnittprogramms (10) für eine elektrisch angetriebene Schneidemaschine (11), um einen einzelnen Druckbogen (1), welcher grafische Schnittmarken (3₁-3₄) aufweist, oder einen Stapel (5) von gleichen Druckbögen (1), welche jeweils die gleichen grafischen Schnittmarken (3₁-3₄) aufweisen, zu schneiden, mit folgenden Verfahrensschritten:
- Bereitstellen eines digitalen Druckbogens (1'), der ein digitales Druckbild (2') und vektorbasierte Schnittmarken (3₁'-3₄') enthält, in Form einer digitalen Datei;
- automatisiertes Identifizieren der vektorbasierten Schnittmarken (3₁'-3₄') in dem digitalen Druckbogen (1') durch Verarbeiten von im digitalen Druckbogen (1') enthaltenen Vektordaten; und
- automatisiertes Generieren eines Schnittprogramms (10) für eine elektrisch angetriebene Schneidemaschine (11) anhand der identifizierten, vektorbasierten Schnittmarken (3₁'-3₄'), um einen Druckbogen (1) oder einen Stapel (5) von Druckbögen (1) in der Schneidemaschine (11) zu schneiden.

2. Verfahren nach Anspruch 1, **dadurch gekennzeichnet, dass** der digitale Druckbogen (1') aus einer Druckvorstufe des Druckbogens (1) bereitgestellt wird.

3. Verfahren nach einem der vorhergehenden Ansprüche, **dadurch gekennzeichnet, dass** der digitale Druckbogen (1') in einem vektorbasierten Dateiformat, insbesondere in einem PDF- oder SVG-Format, vorliegt.

4. Verfahren nach einem der vorhergehenden Ansprüche, **dadurch gekennzeichnet, dass** das Identifizieren der vektorbasierten Schnittmarken (3₁'-3₄') das automatisierte Identifizieren einer Matrix von gleichgroßen digitalen Bildelementen (4') in dem digitalen Druckbogen sowie das automatisierte Identifizieren von randseitigen Vektoren, welche außerhalb der randseitig projizierten Reihen- und Spaltenbereiche der digitalen Bildelemente (4') und parallel zu den Reihen und Spalten der Matrix verlaufen, in dem digitalen Druckbogen als vektorbasierte Schnittmarken (3₁'-3₄') umfasst.

5. Verfahren nach einem der vorhergehenden Ansprüche, **dadurch gekennzeichnet, dass** das Schnittprogramm (10) außerhalb einer Maschinensteuerung (12) der Schneidemaschine (11) generiert und anschließend an die Maschinensteuerung (12) übertragen wird.

6. Verfahren nach Anspruch 5, **dadurch gekennzeichnet, dass** die Übertragung des Schnittprogramms (10) an die Maschinensteuerung (12) mittels Scannen eines gedruckten zweidimensionalen Codes, welcher das Schnittprogramm (10) enthält, insbesondere eines QR-Codes, erfolgt.

7. Verfahren nach Anspruch 5, **dadurch gekennzeichnet, dass** die Übertragung des Schnittprogramms (10) an die Maschinensteuerung (12) mittels eines drahtgebundenen oder drahtlosen Netzwerks erfolgt.

8. Verfahren nach Anspruch 5, **dadurch gekennzeichnet, dass** die Übertragung des Schnittprogramms (10) an die Maschinensteuerung (12) mittels eines mobilen Speichermediums, in dem das Schnittprogramm (10) gespeichert ist, erfolgt.

9. Verfahren nach einem der vorhergehenden Ansprüche, **dadurch gekennzeichnet, dass** im Vorfeld der automatisierten Generierung des Schnittprogramms (10) verschiedene Parameter für die Reihenfolge, Art und Anzahl der notwendigen Schnitte des Schnittprogramms (10) gewählt werden, um das Schnittergebnis und die Schnittqualität zu beeinflussen.

10. Computerprogrammprodukt, welches Codemittel aufweist, die zum Durchführen aller Schritte des Verfahrens nach einem der vorhergehenden Ansprüche angepasst sind, wenn das Programm auf einer Maschinensteuerung (12) einer elektrisch angetriebenen Schneidemaschine (11) abläuft.

## Geänderte Patentansprüche

### Geänderte Patentansprüche gemäss Regel 137(2) EPÜ.

1. Verfahren zum automatisierten Generieren eines Schnittprogramms (10) für eine elektrisch angetriebene Schneidemaschine (11), um einen einzelnen Druckbogen (1), welcher grafische Schnittmarken (3₁-3₄) aufweist, oder einen Stapel (5) von gleichen Druckbögen (1), welche jeweils die gleichen grafischen Schnittmarken (3₁-3₄) aufweisen, zu schneiden, mit folgenden Verfahrensschritten:
- Bereitstellen eines digitalen Druckbogens (1'), der ein digitales Druckbild (2') und vektorbasierte Schnittmarken (3₁'-3₄') enthält, in Form einer digitalen Datei;
- automatisiertes Identifizieren der vektorbasierten Schnittmarken (3₁'-3₄') in dem digitalen Druckbogen (1') durch Verarbeiten von im digitalen Druckbogen (1') enthaltenen Vektordaten; und
- automatisiertes Generieren eines Schnittprogramms (10) für eine elektrisch angetriebene Schneidemaschine (11) anhand der identifizierten, vektorbasierten Schnittmarken (3₁'-3₄'), um einen Druckbogen (1) oder einen Stapel (5) von Druckbögen (1) in der Schneidemaschine (11) zu schneiden,
wobei das Schnittprogramm abarbeitungsfähige Steuerdaten für den technologischen Arbeitsablauf von Schneidvorgängen umfasst,
**dadurch gekennzeichnet,**
**dass** das Identifizieren der vektorbasierten Schnittmarken (3₁'-3₄') das automatisierte Identifizieren einer Matrix von gleichgroßen digitalen Bildelementen (4') in dem digitalen Druckbogen (1') sowie das automatisierte Identifizieren von randseitigen Vektoren, welche außerhalb der randseitig projizierten Reihen- und Spaltenbereiche der digitalen Bildelemente (4') und parallel zu den Reihen und Spalten der Matrix verlaufen und in ihrer Länge standardmäßigen Schnittmarken entsprechen, in dem digitalen Druckbogen (1') als vektorbasierte Schnittmarken (3₁'-3₄') umfasst.

2. Verfahren nach Anspruch 1, **dadurch gekennzeichnet, dass** der digitale Druckbogen (1') aus einer Druckvorstufe des Druckbogens (1) bereitgestellt wird.

3. Verfahren nach einem der vorhergehenden Ansprüche, **dadurch gekennzeichnet, dass** der digitale Druckbogen (1') in einem vektorbasierten Dateiformat, insbesondere in einem PDF- oder SVG-Format, vorliegt.

4. Verfahren nach einem der vorhergehenden Ansprüche, **dadurch gekennzeichnet, dass** das Schnittprogramm (10) außerhalb einer Maschinensteuerung (12) der Schneidemaschine (11) generiert und anschließend an die Maschinensteuerung (12) übertragen wird.

5. Verfahren nach Anspruch 4, **dadurch gekennzeichnet, dass** die Übertragung des Schnittprogramms (10) an die Maschinensteuerung (12) mittels Scannen eines gedruckten zweidimensionalen Codes, welcher das Schnittprogramm (10) enthält, insbesondere eines QR-Codes, erfolgt.

6. Verfahren nach Anspruch 4, **dadurch gekennzeichnet, dass** die Übertragung des Schnittprogramms (10) an die Maschinensteuerung (12) mittels eines drahtgebundenen oder drahtlosen Netzwerks erfolgt.

7. Verfahren nach Anspruch 4, **dadurch gekennzeichnet, dass** die Übertragung des Schnittprogramms (10) an die Maschinensteuerung (12) mittels eines mobilen Speichermediums, in dem das Schnittprogramm (10) gespeichert ist, erfolgt.

8. Verfahren nach einem der Ansprüche 4 bis 7, **dadurch gekennzeichnet, dass** im Vorfeld der automatisierten Generierung des Schnittprogramms (10) verschiedene Parameter für die Reihenfolge, Art und Anzahl der notwendigen Schnitte des Schnittprogramms (10) gewählt werden, um das Schnittergebnis und die Schnittqualität zu beeinflussen.

9. Verfahren nach einem der Ansprüche 1 bis 3, **dadurch gekennzeichnet, dass** im Vorfeld der automatisierten Generierung des Schnittprogramms (10) verschiedene Parameter für die Reihenfolge, Art und Anzahl der notwendigen Schnitte des Schnittprogramms (10) gewählt werden, um das Schnittergebnis und die Schnittqualität zu beeinflussen

10. Computerprogrammprodukt, welches Codemittel aufweist, die zum Durchführen aller Schritte des Verfahrens nach einem der Ansprüche 1 bis 3 und 9 angepasst sind, wenn das Programm auf einer Maschinensteuerung (12) einer elektrisch angetriebenen Schneidemaschine (11) abläuft.
